## Europäisches Patentamt
## European Patent Office
## Office européen des brevets

(19)

(11) Veröffentlichungsnummer: **0 024 626**
**A2**

# (12) EUROPÄISCHE PATENTANMELDUNG

(21) Anmeldenummer: 80104752.3

(22) Anmeldetag: 12.08.80

(51) Int. Cl.³: **G 01 D 3/00**
**G 01 D 9/02**

(30) Priorität: 04.09.79 DE 2935596

(43) Veröffentlichungstag der Anmeldung:
**11.03.81 Patentblatt 81/10**

(84) Benannte Vertragsstaaten:
**DE FR GB**

(71) Anmelder: **International Business Machines Corporation**

**Armonk, N.Y. 10504(US)**

(72) Erfinder: **Bohg, Armin**
**Mozartstrasse 13**
**D-7031 Weil im Schönbuch 2(DE)**

(74) Vertreter: **Busch, Robert, Dipl.-Ing.**
**Schönaicher Strasse 220**
**D-7030 Böblingen(DE)**

(54) **Verfahren und Anordnungen zur Steuerung einer Aufzeichnungseinheit.**

(57) Kurvenschreiber und -anzeigegeräte sind zur Aufzeichnung von an sich außerhalb eines Aufzeichnungsfeldes (1) auf einem Aufzeichnungsmedium (10) liegenden Kurvenbereichen (2') mit einer Logik ausgestattet, die diese Kurvenbereiche (2') in das Aufzeichnungsfeld (1) rückt, indem entweder nach Erreichen einer Randbegrenzung (3, 5) des Aufzeichnungsfeldes (1) die Kurvenaufzeichnung (4) von hier in umgekehrter Aufzeichnungsrichtung fortgesetzt wird oder aber bei Beibehaltung der ursprünglichen Aufzeichnungsrichtung die Fortsetzung der Kurvenaufzeichnung (4') von der jeweils entgegengesetzten Randbegrenzung des Aufzeichnungsfeldes (1) ab aufgenommen wird. Die Aufzeichnung kann mit Hilfe von Digital- oder Analogmaßnahmen durchgeführt werden, wobei die Aufzeichnung von Randüberschreitungs-Kurvenbereichen (2') in spezieller Weise kenntlich gemacht wird.

FIG.1A

FIG.1B

Verfahren und Anordnungen zur Steuerung einer Aufzeichnungseinheit

Die Erfindung betrifft ein Verfahren, wie es dem Oberbegriff des Patentanspruchs 1 zu entnehmen ist und Anordnungen zur Durchführung dieses Verfahrens.

Aufzeichnungseinheiten in Form von Kurvenschreibern oder Zwei-Koordinaten-Sicht- oder Registriergeräten finden vielfach Anwendung als Pegelschreiber, Analogrechner- sowie Integratorausgabenanordnungen und dergleichen. Problematisch hierbei ist allgemein die Einstellung des Aufzeichnungsmaßstabes, da hiervon die zu erzielende Aufzeichnungsgenauigkeit abhängt. Zur Aufzeichnung von Kurven, die keine überstarken Ausschläge aufweisen können oder bei denen solche nicht zu erwarten sind, ist allerdings im allgemeinen keine besondere Maßnahme erforderlich. Kritisch wird die Situation erst dann, wenn zusätzlich zum erwarteten Kurvenverlauf auch noch mit übergroßen Kurvenausschlägen, gar mit sogenannten Ausreißern, zu rechnen ist. Wird nämlich dabei der Aufzeichnungsmaßstab so eingestellt, daß bei einiger Sicherheit ziemlich alle Kurvenausschläge noch zu erfassen sind, dann ist unter Umständen die Aufzeichnungsgenauigkeit nicht ausreichend, so daß gegebenenfalls wertvolle Information verloren gehen kann. Andererseits ist aber auch ein Abschneiden von starken Kurvenausschlägen bzw. Ausreißern nicht immer zufriedenstellend, da abgesehen vom hierdurch bedingten, zwangsläufig sich ergebenden Informationsverlust auch der Fall eintreten kann, daß eine aufzuzeichnende Kurve, wenn auch nur mit sehr geringer Wahrscheinlichkeit, einen wahren

GE 979 002E

Meßwert-Verlauf über eine mehr oder weniger lange Strecke längs des Randes des Aufzeichnungsfeldes nehmen kann. Jedenfalls läßt sich hierbei nicht ohne weiteres feststellen, ob echte Information vorliegt oder nicht.

Um hier wenigstens einigermaßen Abhilfe zu schaffen, wird gemäß der deutschen Offenlegungsschrift 1 798 042 ein Vergleich zwischen dem zu registrierenden Meßwert mit einem der Randbegrenzung des Aufzeichnungsfeldes entsprechenden Bezugswert vorgenommen, um bei Aufzeichnungsfeldüberschreitung eintreffender Messwerte besondere Elektroden an den Enden der Schreibanordnung bzw. des Aufzeichnungsorgans zu erregen. Diese Elektroden lassen hierauf Aufzeichnungsorgane ansprechen, um auf dem Aufzeichnungsmedium kenntlich zu machen, wenn jeweils ein Kurvenbereich außerhalb des Aufzeichnungsfeldes vorliegt. Wenn hiermit auch deutlich zwischen Kurvenbereichen außerhalb des Aufzeichnungsfeldes und Meßwertverläufen längs Randbegrenzungen des Aufzeichnungsfeldes unterschieden werden kann, so geht dann doch immer noch die Information verloren, die Kurvenbereichen außerhalb des Aufzeichnungsfeldes zugeordnet ist. Das heißt, auch in diesen Fällen muß immer noch die Maßstabseinstellung zur Kurvenaufzeichnung kritisch abgewogen werden, wenn kein Informationsverlust in Kauf genommen werden soll. Es gibt zwar noch Messgeräte mit Maximal- und Minimalmeßwerterfassung, wie in der deutschen Offenlegungsschrift 2 656 304 gezeigt, wobei Zähler, Meßwertvergleicher und -speicher Anwendung finden, jedoch ist hier nicht die kontinuierliche Meßwert-Aufzeichnung bei Skalenüberschreitung vorgesehen.

Zur Aufzeichnung von Resultaten eines Analogrechners ist es bekannt, Maßstabsfaktoränderungen, insbesondere auch automatisch, vorzusehen, wie es z. B. dem Buch "Elektronische Analogierechenmaschinen" von G. A. Korn und T. M. Korn, Verlag "Berliner Union", Stuttgart 1960, auf den Seiten 386 und 387 zu entnehmen ist. Demzufolge läßt sich eine Rechenmaschine periodisch oder auch nach vorbestimmten Zeitintervallen in einen "Haltezustand" zum Ablesen von Werten ausgewählter Maschinenvariablen für Prüfung, Druck, Aufzeichnungsmediumsverarbeitung oder Übertragung bringen. In hierbei auftretenden Zeitspannen können dann, falls erforderlich, Maßstabsfaktoren geändert werden. Der Vorgang läßt sich auch automatisch auslösen, sobald ausgewählte Maschinenvariablen vorbestimmte Werte über- oder unterschreiten, indem Vergleicherschaltungen herangezogen werden, um elektronische Umschalteinrichtungen zu betätigen, die den Analogrechner in den "Haltezustand" bringen und den Maßstabsfaktor wie gewünscht abändern, so daß der Rechenvorgang mit jeweils richtiger Maßstabseinstellung erneut eingeleitet werden kann.

Wenn als Bezugswerte für diese vorbestimmten, zu über- oder unterschreitenden Werte die Randbegrenzungen eines Aufzeichnungsfeldes eingesetzt werden, dann ist zwar bei jeweiliger Wahl eines zur Aufzeichnung geeigneten Maßstabes gewährleistet, daß auch extreme Kurvenausschläge noch erfaßt werden können, indem bei normalem Kurvenverlauf sogar ein ausreichend großer Maßstab vorliegt, jedoch ist zwangsläufig die Genauigkeit bei Aufzeichnung von Kurvenmaxima und -minima jeweils entsprechend herabgesetzt. Also auch hier geht Information infolge nunmehr jeweils herabgesetzter Auflösung verloren. Aus dem Buch "Electronic Analog and Hybrid Computers" von G. A. Korn und T. M. Korn, Verlag "Mc Graw Hill Book Company" geht aus Seite 38 ebenfalls hervor, daß bei Analogrechnerausgabe der Maßstabsfaktor jeweils durch empirische Ermittlung festzusetzen ist. Allenfalls lassen sich gemäß Seite 451 und 452 des zuletzt genannten Buches Warnleuchtanzeigen anwenden, um eine Aufzeichnungsfeldüberschreitung bei Kurvenaufzeichnung anzuzeigen.

Es bleibt also festzuhalten, daß der Stand der Technik keine geeignete Lösung des Problems hergibt, das mit Aufzeichnungs-

- 4 -

feld-überschreitung bei Kurvenaufzeichnung und -darstellung einhergeht. Die Aufgabe der Erfindung besteht deshalb darin, in Vermeidung einer jeweils erforderlichen kritischen Maßstabswahl die Kurvenaufzeichnung bei Analogrechnerausgabe, Meßwertausgabe, Nachrichtenübertragung und dgl. mit Hilfe von Zwei-Koordinaten-Sicht- und Registriergeräten durchzuführen, so daß die von einem Meßwertgeber bereitgestellte Information voll erhalten und zudem in einmal eingestellter Auflösung auswertbar bleibt.

Erfindungsgemäß wird diese Aufgabe gelöst, wie es dem Kennzeichen des Patentanspruchs 1 zu entnehmen ist.

Das erfindungsgemäße Verfahren ist, wie gesagt, nicht nur für Kurvenschreiber mit mechanischer Aufzeichnungsorganauslenkung, sondern auch für Oszillographen und Oszilloskope anwendbar. Bei mechanischer Aufzeichnung mittels Schreibstiften kann die Kurvenaufzeichnung nicht nur durch entsprechende Auslenkung eines Aufzeichnungsorgans über die Aufzeichnungsbreite erfolgen, sondern läßt sich auch, wie es in der deutschen Patentschrift 16 23 885 beschrieben ist, mit Hilfe einer Reihe von isoliert angebrachten Schreibelektroden ausführen, die selektiv durch elektrische Schreibspannungen erregt werden.

Wird das erfindungsgemäße Verfahren mit Hilfe eines Digitalrechners durchgeführt, dann kann auch ein Drucker im Ansprechen auf die Meßwerte zur Kurvenaufzeichnung auf eine Papierbahn entsprechend erregt werden.

In allen Fällen liegt also bei Kurvenaufzeichnung bzw. -darstellung unmittelbare Meßwert-Aufzeichnung vor, solange keine Aufzeichnungsfeldüberschreitung seitens der Meßwerte erfolgen kann, hingegen ergibt sich gemäß der Erfindung mittelbare Meßwert-Aufzeichnung dann, wenn seitens der im vorgegebenen Aufzeichnungsmaßstab erfaßten Meßwerte eine Aufzeichnungsfeld-Überschreitung unvermeidlich ist.

Eine Kennzeichnung des in das Aufzeichnungsfeld bei Meßwertüberschreitung hineingerückten Kurvenbereichs, also einer mittelbaren Aufzeichnung, läßt sich auf mannigfache Weise durchführen, wobei entweder besondere Aufzeichnungsorgane vorgesehen sein können oder eine spezielle Aufzeichnungsorgansteuerung bei Verwendung nur eines Aufzeichnungsorgans, z. B. Schreibstift, Anwendung finden kann, indem in diesen Fällen Strichelung, Strich-Punktierung der Kurvenabschnitte und dergleichen durchgeführt werden.

Es ist also dank der Erfindung sichergestellt, daß, insbesondere auch durch Kenntlichmachen des aufgezeichneten Kurvenbereichs bei Meßwertüberschreitung des Aufzeichnungsfeldes, die durch die Meßwerte bereitgestellte Information in vollem Umfang zur Verfügung steht bzw. erhalten bleibt. So kann ganz besonders auch bei Registriervorgängen, die ohne dauernde Überwachung, z. B. nachts, ablaufen, ein geeignet erscheinender Maßstab zur Aufzeichnung ein für alle mal eingestellt werden, ohne daß befürchtet werden muß, daß bei in unbewachten Zeitintervallen auftretenden extremen Kurvenausschlägen wertvolle Information verloren gehen könnte.

In spezieller Ausgestaltung der Erfindung wird zwar innerhalb von aufeinanderfolgenden Zeitintervallen jeweils eine direkte Abhängigkeit der in Kurvenform aufgezeichneten Werte von den Meßwerten aufrechterhalten, jedoch folgen und gehen einem Zeitintervall mit unmittelbarer Meßwert-Aufzeichnung im einen Fall ohne Sprungstelle jeweils ein Zeitintervall mit hierzu spiegelbildlicher Abhängigkeit und im anderen Falle jeweils mit Sprungstellen Zeitintervalle mit mittelbarer Meßwert-Aufzeichnung unter Berücksichtigung der durch die jeweilige Sprungstelle bedingten Additions- bzw. Subtraktionskonstanten voran. Im ersten Fall entspricht gemäß der

- 6 -

Erfindung ein jeweiliges Zeitintervall einer Halbperiode einer asymmetrischen Sägezahnschwingung, während im zweiten Fall das jeweilige Zeitintervall zwischen zwei Sprungstellen eine Periodendauer einer asymmetrischen Sägezahnschwingung ausmacht.

Hinzu kommt, daß bei Anwenden eines symmetrischen Sägezahnverlaufs der Vorteil einer kontinuierlichen Kurvenaufzeichnung auch nach Übergang der Meßwert-Aufzeichnung von unmittelbarer zu mittelbarer bzw. umgekehrt vorliegt, da der entsprechende Kurvenbereich gewissermaßen in das Aufzeichnungsfeld zurückgeklappt wird. Hierbei kann also überhaupt keine Information bei Aufzeichnung verloren gehen. Allerdings liegt hier der, allerdings als äußerst gering zu wertende, Schönheitsfehler vor, daß für diesen Fall der Kurvenaufzeichnung die Aufzeichnungsskala rückläufig ist, was jedoch in der Praxis bei einiger Übung nicht als, wenn auch nur geringer, Nachteil angesehen werden dürfte.

Bei Ausnutzen eines asymmetrischen Sägezahnverlaufs mit entsprechenden Sprungstellen wird nach Aufzeichnungsfeld-Überschreitung seitens der Meßwerte der hierdurch bedingte Kurvenabschnitt in mittelbarer Aufzeichnung an der jeweils gegenüberliegenden Aufzeichnungsfeld-Begrenzung fortgesetzt, so daß zwar in diesem Falle keine rückläufige Aufzeichnungsskala angewendet zu werden braucht und außerdem noch in vorteilhafter Weise eine besondere Kenntlichmachung des Meßwertüberschreitungs-Kurvenabschnitts entfallen kann, jedoch, wenn auch nur äußerst geringfügig, jeweils Information an den Sprungstellen verloren gehen kann. Die besondere Kenntlichmachung der ganannten Kurvenabschnitte kann deshalb entfallen, weil infolge der jeweils eine mittelbare Meßwert-Aufzeichnung einleitenden und beschließenden Sprungbefehle die Aufzeichnungsorgane nur intermitierend wirksam sein können.

GE 979 002E

- 7 -

Welchem der beiden oben angezogenen Verfahren schließlich der Vorzug eingeräumt wird, muß also ganz von der zu lösenden Aufgabe, d. h. der jeweiligen Meß- und Funktions-Werterfassung mit hiervon gesteuerter Aufzeichnung bzw. Darstellung, abhängen.

Bei Anwenden rein digitaler und hybrider Technik läßt sich in vorteilhafter Weise zur Durchführung des erfindungsgemäßen Verfahrens ein Impulsfolgenbegrenzer anwenden, der sich durch einen Digitalrechner realisieren läßt, durch eine Zählersteuerungseinrichtung dargestellt werden kann oder aus einem adressierbaren Festwertspeicher bestehen kann. Andere Arten von Impulsbegrenzern lassen sich der einschlägigen Literatur entnehmen. Hierzu ist es dann erforderlich, entweder einen Digitalmeßwertaufnehmer zusammen mit einem Digitalkurvenaufzeichner zu verwenden, oder einen Analog-Digital-Umsetzer vorzuschalten und/oder einen Digital-Analog-Umsetzer zur Ausgabe der Aufzeichnungswerte hinten anzuschließen.

In vorteilhafter Weise läßt sich jedoch in die Steuereinrichtung zum Betreiben der Aufzeichnungseinheit eine Decodiermatrix integrieren, deren Eingang dann mit dem Ausgang des Impulsfolgenbegrenzers verbunden ist. Eine derartige Decodiermatrix wird z. B. bei Registriereinrichtungen verwendet, wie sie der deutschen Patentschrift 1 623 885 zu entnehmen sind. Während im letzteren Falle keine besondere Steuerleitung erforderlich ist, um ein Aufzeichnungsfeldbegrenzungssignal vom Impulsbegrenzer auf die Steuereinrichtung der Anzeigeeinheit zu übertragen, wird vorteilhafterweise jedoch zur Übertragung von Signalen für die Kennzeichnung mittelbarer Meßwertaufzeichnung eine derartige Steuerleitung zwischen Impulsfolgenbegrenzer und Steuereinrichtung vorgesehen. Damit läßt sich dann eine zuverlässige Betriebsweise erzielen.

GE 979 002E

In vorteilhafter Weiterbildung der Erfindung kann ein Analog-Digital-Umsetzer gleichzeitig zur Impulsfolgenbegrenzung herangezogen werden, wobei dann zweckmäßigerweise Analog-Digital-Umsetzer Verwendung finden, wie sie z. B. dem "Taschenbuch der Nachrichtenverarbeitung", 2. Auflage, herausgegeben von K. Steinbuch, im auf Seite 727 beginnenden Kapitel "5.8.5. Analog-Digital-Umsetzer für elektrischen Größen zu entnehmen sind.

Anstelle von Digital- und Hybridverfahren lassen sich natürlich auch reine Analogschaltungsanordnungen zur Durchführung des erfindungsgemäßen Verfahrens anwenden. Auch hier wiederum liegen zwei Möglichkeiten vor, nämlich einmal einen symmetrischen und zum anderen einen asymmetrischen Sägezahnverlauf anzuwenden. Bei Ausnutzen eines symmetrischen Sägezahnverlaufs kann eine zweiseitige Begrenzungsschaltungsanordnung Verwendung finden, wie sie z. B. dem letzgenannten Buch auf Seite 1150 mit der Abbildung 10.3/54c zu entnehmen ist, allerdings vorzugsweise in Ausführung mit Nullpunktsymmetrierung, und wie sie durch einen Verstärker mit zweiseitiger Begrenzung zu realisieren ist. Durch Kombination mit entsprechenden Analogaddierern läßt sich dann der gewünschte Kurvenverlauf herbeiführen.

Bei Ausnutzen eines asymmetrischen Sägezahnverlaufs wird die Sägezahnamplitude durch zwei elektronische Umschalteinrichtungen festgelegt, die im Zusammenwirken mit einem Verstärker auf einen Analogaddierer einwirken, der zur Steuerung der Aufzeichnung dient. Hierfür geeignete Umschaltungseinrichtungen können Differentialverstärker, Stromübernahmeschalter und dgl. sein, wie sie aus der einschlägigen Literatur bekannt sind.

Die Kennzeichnung des jeweiligen Kurvenabschnitts bei mittelbarer Meßwertaufzeichnung kann, wie gesagt, durch unter-

GE 979 002E

schiedliche Farben, unterschiedlich gestrichelte Kurvenverläufe, unterschiedliche Strichstärken usw. unter entsprechender Steuerung durch die Steuerungseinrichtung erfolgen. Auch hier kann auf an sich bekannte Maßnahmen, wie sie z. B. in der deutschen Offenlegungsschrift 2 752 471 beschrieben sind, zurückgegriffen werden. Andererseits läßt sich auch eine derartige Kennzeichnung in einfachster Weise durch besondere Aufzeichnungsorgane im Bereich der Aufzeichnungsfeldbegrenzungen vornehmen, indem, wie in der deutschen Offenlegungsschrift 1 798 042 gezeigt, zusätzlich Strichmarkierungen längs des entsprechenden Aufzeichnungsfeldrandes vom Einsatz mittelbarer Meßwert-Aufzeichnung an bis zur Wiederaufnehme unmittelbarer Meßwert-Aufzeichnung vorgesehen werden. Jede besondere Kurvenabschnitts-Kennzeichnung kann dabei entfallen. Allerdings dürfte es vorteilhaft sein, bei mehrfacher Aufzeichnungsfeldüberschreitung in einer Richtung eine entsprechende zusätzliche Kenntlichmachung der Kurvenverläufe vorzunehmen, um so jegliche Mißdeutungen auszuschließen.

Bei Anwenden von Analogschaltungen wird in einfachster Weise nur eine einmalige Kurvenüberschreitung an einer Randbegrenzung des Aufzeichnungsfeldes erfaßt. Wird diese Randbegrenzung eines Aufzeichnungsfeldes infolge eines übermäßigen Kurvenausschlags mehrfach überschritten bzw. sollen Mehrfachüberschreitungen noch erfaßt werden, dann muß eine entsprechende Anzahl von Analogaufzeichnungssteuereinheiten hintereinander geschaltet werden, um in diesen Fällen noch die Aufgabe erfüllen zu können.

Zusammenfassend läßt sich sagen, daß es dank der Erfindung nunmehr möglich ist, eine unüberwachte Registrierung, z. B. während Ruhepausen, durchführen zu können, ohne daß bei einer einmal gewählten Maßstabeinstellung zur Kurvenaufzeichnung unerwartete Umstände in Form übermäßiger Kurvenaus-

GE 979 002E

schläge zumindest in etwa einkalkuliert werden müssen. Zudem läßt sich dank der Erfindung selbst bei sehr großen Amplitudenunterschieden die gewünschte Aufzeichnungsgenauigkeit beibehalten; es geht also keinerlei Information verloren. Neueinstellungen des Maßstabes sind in vielen Fällen auch dann nicht erforderlich, wenn ein Abwärtstrend oder ein Aufwärtstrend aufzuzeichnender Kurven oder in relativ wenigen Fällen eine Mittel- oder Zentralwertverlagerung vorliegt. Vorteilhafte Weiterbildungen und Ausgestaltungen der Erfindung sind im einzelnen den Unteransprüchen zu entnehmen.

In entsprechender Abwandlung läßt sich die Erfindung aber auch für die Erstellung von sogenannten Punktfeldern ebenso vorteilhaft anwenden.

Weitere vorteilhafte Ausgestaltungen der Erfindung lassen sich den Unteransprüchen entnehmen.

Die Erfindung wird anschließend anhand einer Ausführungsbeispielsbeschreibung mit Hilfe der unten aufgeführten Zeichnungen näher erläutert.

Es zeigen:

Fig. 1A    einen Aufzeichnungsmediumausschnitt mit das Aufzeichnungsfeld überschreitenden Kurvenabschnitten, die zu mittelbarer Meßwert-Aufzeichnung bzw. -Darstellung in das Aufzeichnungsfeld zurückgeklappt sind,

Fig. 1B    einen Aufzeichnungsmediumausschnitt mit das Aufzeichnungsfeld überschreitenden Kurvenabschnitten, die zu mittelbarer Meßwert-Aufzeichnung bzw. -Darstellung in das Aufzeichnungsfeld zurückgeschoben sind,

GE 979 002E

Fig. 2          einen Programmablaufplan zur Erläuterung der
                Erfindung,

Fig. 3A         das Blockschaltbild zur Anwendung eines Hybridverfahrens zur Durchführung der Erfindung,

Fig. 3B         das Blockschaltbild für ein vereinfachtes
                Hybridverfahren zur Durchführung der Erfindung,

Fig. 4          die Darstellung eines symmetrischen Sägezahnverlaufs, wie er dem Betrieb der unter Fig.
                3A und 3B dargestellten Blockschaltbilder zugrundeliegt,

Fig. 5          die Darstellung eines asymmetrischen Sägezahnverlaufs, wie er dem Betrieb der Blockschaltbilder Fig. 3A und 3B in entsprechender Abwandlung gegenüber zuvor zugrundeliegt,

Fig. 6          ein Blockschaltbild zur Durchführung des er-
                findungsgemäßen Verfahrens mit Hilfe einer
                Analogschaltung unter Ausnutzen eines symmetrischen Sägezahnverlaufs,

Fig. 7          die Darstellung eines symmetrischen Sägezahnverlaufs, wie er dem Betrieb einer Schaltungsanordnung nach Fig. 6 zugrundeliegt,

Fig. 8          ein Analog-Blockschaltbild zur Durchführung
                des erfindungsgemäßen Verfahrens unter Anwendung eines asymmetrischen Sägezahnverlaufs,

Fig. 9          die Darstellung eines asymmetrischen Sägezahnverlaufs, wie er dem Betrieb einer Schaltungsanordnung nach Fig. 8 zugrundeliegt.

GE 979 002E

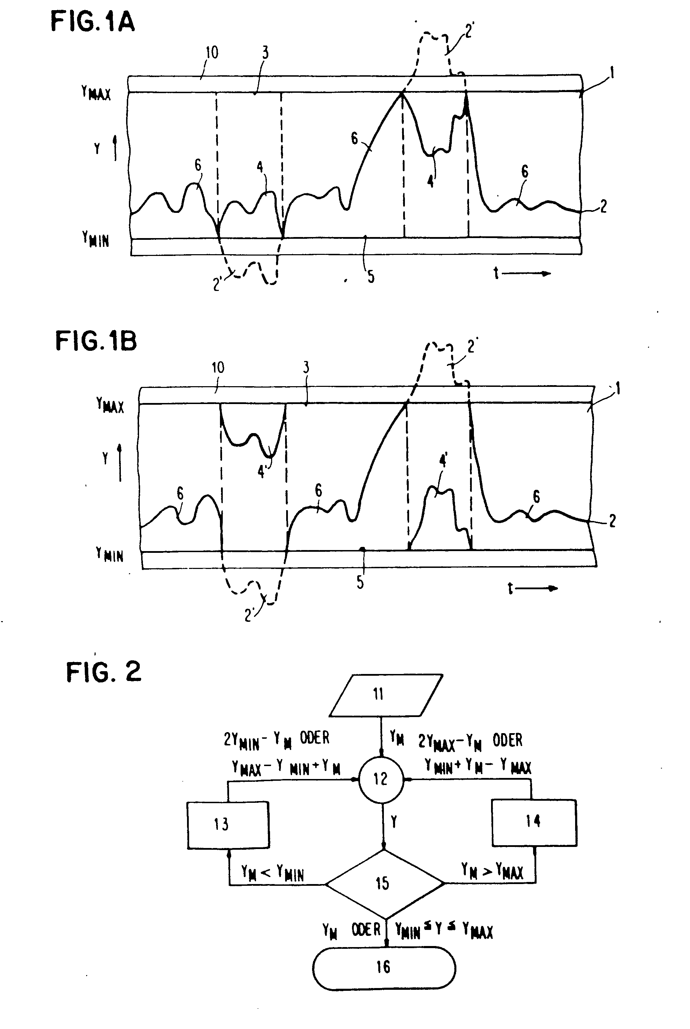

Mit den Figuren 1A und 1B ist zwar jeweils der Ausschnitt aus einem Aufzeichnungsmedium, insbesondere hier eines Registrierstreifens 10, gezeigt, jedoch gilt dies nur als Beispiel, da wie gesagt auch jede andere Art der Aufzeichnung bzw. Darstellung, insbesondere auch Punktfeld, für die Anwendung des erfindungsgemäßen Verfahrens geeignet ist. So kann z. B. auch die Darstellung auf einem Oszilloskop oder mit Hilfe eines Oszillographen ebensogut Anwendung finden, wobei dann natürlich das Aufzeichnungsmedium durch den Bildschirm ersetzt ist.

Eine etwas andere Darstellungsart ergibt sich beim Ausdrucken von Kurven mit Hilfe einer Digitalrechenanlage, wobei dann zur Ausgabe ein Drucker entsprechend gesteuert werden muß. Auf dem Druckformular wird dabei die darzustellende Kurve aus jeweils geeignet gewählten Zeichen zusammengesetzt, die aufeinanderfolgend je nach dem gewünschten Kurvenverlauf zur Wiedergabe angesteuert werden. In diesem Falle lassen sich in relativ einfacher Weise verschiedene Kurvenverläufe bzw. bestimmte Kurvenabschnitte unterschiedlich darstellen, indem entweder zur Kurvendarstellung entsprechend unterschiedliche Zeichen Verwendung finden oder aber in den Kurvenverlauf Unterbrechungen einprogrammiert werden.

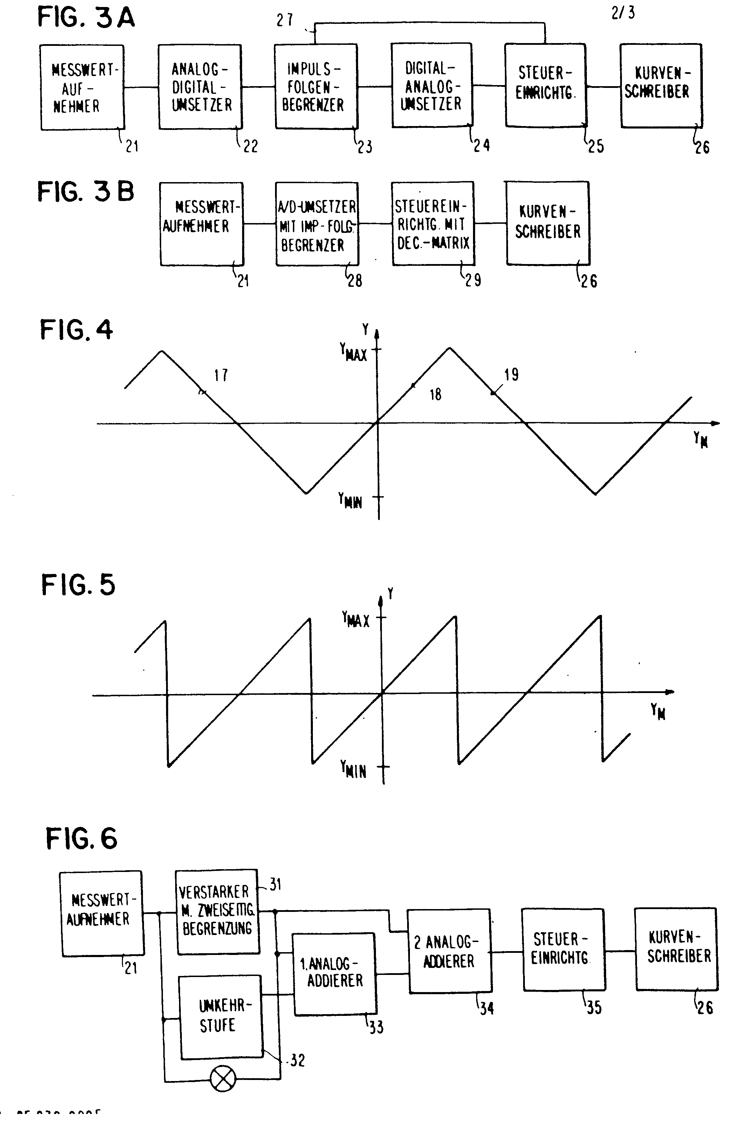

In beiden Darstellungen, also Fig. 1A und 1B, sind jeweils gleiche Einzelheiten mit gleichen Bezugszeichen versehen, was übrigens auch für die übrigen Zeichnungen Fig. 3A bis Fig. 9 gilt. Im jeweiligen Aufzeichnungsfeld 1 der gezeigten Aufzeichnungsmedien 10 ist ein Kurvenverlauf 2 vorhanden, der mit den Kurvenbereichen 2' Aufzeichnungsbreitenüberschreitungen sowohl an der oberen Randbegrenzung 3 als auch an der unteren Randbegrenzung 5 des jeweiligen Aufzeichnungsfeldes 1 zeigt.

Dank der Erfindung nun ist dafür Sorge getragen, daß diese Aufzeichnungsbreitenüberschreitungen der Meßwerte bei Kurvenschreibung nicht unterdrückt werden, sondern daß vielmehr jeweils der unmittelbaren Meßwert-Aufzeichnung nunmehr eine mittelbare Meßwert-Aufzeichnung bei Aufzeichnungsbreitenüberschreitung folgt, indem der jeweils vorliegende Kurvenverlauf in Form von Kurvenabschnitten 4 bzw. 4' zur Aufzeichnung gelangt. Der Kurvenverlauf 2 setzt sich also aus den Kurvenabschnitten 6, hervorgerufen durch unmittelbare Meßwert-Aufzeichnung mit Hilfe eines Aufzeichnungsorgans bzw. mittels unmittelbarer Steuerung von Aufzeichnungsorganen, und den Kurvenabschnitten 4 bzw. 4', hervorgerufen durch mittelbare Meßwert-Aufzeichnung in Nachführung bzw. Steuerung der Aufzeichnungsorgane zusammen, wenn von Unstetigkeitsstellen zwischen jeweiligem Kurvenabschnitt 4' zu betreffenden Kurvenabschnitten 6 abgesehen wird.

Der Einfachheit halber sei hier angenommen, daß diese Kurvenverläufe eine Funktion $Y = f(t)$ darstellen. Die obere Aufzeichnungsfeldbegrenzung 3 entspricht dann einem Wert $Y_{MAX}$ und die untere Aufzeichnungsfeldbegrenzung 5 einem Wert $Y_{MIN}$. Mit den hier vorliegenden Abbildungen werden grundsätzlich zwei Möglichkeiten zur Realisierung der Erfindung aufgezeigt. Gemäß den der Fig. 1A zugrundeliegenden Verfahren ergibt sich der große Vorteil, daß die Kurvenaufzeichnung infolge einfachen Umklappens direkt von unmittelbarer in mittelbare Meßwert-Aufzeichnung bzw. umgekehrt übergeht.

Bei der zweiten Realisierungsmöglichkeit setzt sich zwar auch der Kurvenverlauf 2 im Aufzeichnungsfeld 1 aus den unmittelbar im Ansprechen auf die Meßwerte aufgezeichneten Kurventeilen 6 und aus den mittelbar im Ansprechen auf die Meßwerte aufgezeichneten Kurvenabschnitten 4' zusammen, die aber hier gewissermaßen in das Aufzeichnungsfeld 1 zurückgeschoben werden, jedoch treten an den hierdurch bedingten Unstetigkeitsstellen mehr oder weniger große Unterbrechungen auf, die die Aufzeichnungskontinuität, wenn auch nur äußerst geringfügig, verletzen können. Dafür ergibt sich aber dann

GE 979 002E

der Vorteil, daß hiermit keine Richtungsumkehr der Ordinate, also Ableserichtungsumkehr verbunden ist, sondern lediglich nur eine Skalenverschiebung. Da die hierdurch bedingten Unstetigkeitsstellen infolge jeweils hiermit verbundenen intermittierenden Aufzeichnungen Aufzeichnungsfeldüberschreitungen unter Umständen leicht erkennen lassen, dürfte sich in vielen Fällen deshalb bei Anwenden der letzteren Realisierungsmöglichkeit in vorteilhafter Weise eine besondere Kenntlichmachung von Aufzeichnungsfeldüberschreitungen, und damit von mittelbarer Aufzeichnung, erübrigen.

Aus dem Programmablaufplan nach Fig. 2 lassen sich die Grundlagen des erfindungsgemäßen Verfahrens erkennen. Von einem die Datenquelle 11 darstellenden Meßwertaufnehmer gelangen die Daten in Form der Meßwerte $Y_M$ auf eine Übergangsstelle 12, die ihrerseits die Werte $Y_M$ bzw. Y einer Verzweigung 15 zuführt. Hier wird festgestellt, ob die Werte $Y_M$ bzw. Y innerhalb des Aufzeichnungsfeldes 1 zu liegen kommen, oder entweder die untere Randbegrenzung 5 des Aufzeichnungsfeldes 1, und damit den Wert $Y_{MIN}$, oder die obere Randbegrenzung 3 des Aufzeichnungsfeldes 1 und damit den Wert $Y_{MAX}$ überqueren.

Im ersteren Falle werden die einer ersten Operationseinheit 13 zugeführten Meßwerte $Y_M$ unter Verknüpfung mit den Extremwerten $Y_{MIN}$ und $Y_{MAX}$ so behandelt, daß unter Fortsetzung der Kurvenschreibung die Aufzeichnung von der unteren Begrenzung 5, entsprechend dem Wert $Y_{MIN}$, gemäß der Gleichung $Y = 2 Y_{MIN} - Y_M$ oder nach Verschieben von der oberen Randbegrenzung 3 des Aufzeichnungsfeldes 1, entsprechend dem Wert $Y_{MAX}$, gemäß der Gleichung $Y = Y_M + Y_{MAX} - Y_{MIN}$ durchgeführt wird. Sind die Meßwerte $Y_M$ derart groß, daß wie im zweiten Falle die obere Randbegrenzung 3 des Aufzeichnungsfeldes 1 überschritten wird, dann gelangen die Meßwerte $Y_M$ von der Verzweigung 15 auf die zweite Operationseinheit 14, um hier ebenfalls mit den Extremwerten $Y_{MAX}$ und $Y_{MIN}$ verknüpft zu werden, und zwar je nachdem, ob die Realisierungsmöglich-

0024626

– 15 –

keit nach Fig. 1A oder die Realisierungsmöglichkeit nach Fig. 1B gewählt ist. Im ersteren Falle erfolgt diese Verknüpfung gemäß der Gleichung $2\,Y_{MAX} - Y_M$, um dann die Kurvenaufzeichnung in mittelbarer Meßwert-Aufzeichnung von der oberen Randbegrenzung 3 zurück in das Aufzeichnungsfeld 1 zu führen oder gemäß der Gleichung $y = Y_M + Y_{MIN} - Y_{MAX}$, um die Aufzeichnung im Aufzeichnungsfeld 1 an der unteren Randbegrenzung 5 nach Aufzeichnungsbreitenüberschreitung in mittelbarer Meßwert-Aufzeichnung aufzunehmen.

Die Ergebnisse werden wiederum der Übergangsstelle 12 zugeführt, um dann an der Verzweigung 15 festzustellen, daß nunmehr eine Übertragung auf eine die Grenzstelle 16 darstellende Aufzeichnungseinheit möglich ist, da jetzt der Wert Y in das Aufzeichnungsfeld 1 fällt, oder ob eine nochmalige Verknüpfung entweder in der ersten Operationseinheit 13 oder in der zweiten Operationseinheit 14 durchgeführt werden muß, wenn die betreffende Aufzeichnungsbreitenüberschreitung der Meßwerte größer als die doppelte Aufzeichnungsbreite sein sollte.

Selbstverständlich werden Meßwerte von der Verzweigung 15 direkt auf die Grenzstelle 16 übertragen, wenn festgestellt wird, daß von vornherein keine Aufzeichnungsfeldüberschreitung vorliegt, so daß dann der Aufzeichnungsvorgang ohne weiteres durchgeführt wird.

Aus dem Programmablaufplan gemäß Fig. 2 läßt sich also ersehen, daß es bei Anwendung der Erfindung möglich ist, Aufzeichnungsfeldüberschreitungen von Meßwerten, die einem mehrfachen Wert der Aufzeichnungsbreite entsprechen, noch zu erfassen, so daß sich insbesondere für tragbare Kurvenschreiber Miniaturausführungen bereitstellen lassen, die trotzdem größtmögliche Aufzeichnungsgenauigkeit zulassen.

GE 979 002E

In relativ einfacher Weise läßt sich das Verfahren gemäß der Erfindung digital durchführen, wenn der Meßwertaufnehmer zur Abgabe von Digitalwerten eingerichtet ist. In diesem Falle wird der Ausgang des Meßwertaufnehmers einem Impulsfolgenbegrenzer zugeführt, der so ausgelegt ist, daß nur zwischen den Extremwerten $Y_{MAX}$ und $Y_{MIN}$ liegende Meßwerte $Y_M$ in Digitalform durchgelassen werden, während oberhalb von $Y_{MAX}$ liegende Meßwerte um den den Extremwert übersteigenden Betrag jeweils wieder von $Y_{MAX}$ abgezogen werden, bevor Werte der Aufzeichnungseinheit bereitgestellt werden. Dasselbe gilt in umgekehrter Weise für den Wert $Y_{MIN}$ unterschreitende Meßwerte $Y_M$, die um den jeweils den Extremwert unterschreitenden Betrag dem Wert $Y_{MIN}$ hinzuaddiert werden, bevor sie zur Aufzeichnung gelangen. Auf diese Weise läßt sich dank der Erfindung die Aufzeichnung von Kurven im Aufzeichnungs- bzw. Darstellungsfeld 1 durchführen, ohne daß Information verloren gehen kann. Das zuletzt genannte Digitalverfahren gilt für den in Fig. 1A gezeichneten Aufzeichnungsmodus.

Sollen Aufzeichnungsbreitenüberschreitungen gemäß Fig. 1B aufgezeichnet werden, dann ist der Impulsfolgenbegrenzer 23 so auszulegen, daß bei Unterschreitung des Extremwertes $Y_{MIN}$ dem jeweils gemessenen Meßwert $Y_M$ der der Aufzeichnungsbreite entsprechende Digitalwert hinzugefügt wird, wo hingegen bei Überschreitung des Extremwertes $Y_{MAX}$ von dem jeweils gemessenen Meßwert $Y_M$ der der Aufzeichnungsbreite entsprechende Digitalwert abgezogen wird. In beiden Fällen gelangt also der in Fig. 2 gezeigte Programmablaufplan zur Anwendung. Vergleichskriterien sind hierbei aber immer die durch die Aufzeichnungsbreite vorgegebenen Extremwerte $Y_{MAX}$ und $Y_{MIN}$.

Der erfindungsgemäß verwendete Impulsfolgenbegrenzer 23 kann von an sich bekannter Bauart sein, um die oben beschriebene Operation durchzuführen. Anstelle eines speziell ausgelegten Impulsfolgenbegrenzers 23 läßt sich aber auch ein entsprechend programmierter Digitalrechner einsetzen, um speziell die hier vorliegende Aufgabe durchführen zu können. Eine andere Möglichkeit besteht darin, einen Festwertspeicher einzusetzen, der bei Abruf durch die Meßwerte entsprechend zugeordnete Ausgangswerte bereitzustellen vermag. In allen Fällen aber läßt sich der jeweils verwendete Impulsfolgenbegrenzer 23 so auslegen, daß auch mehrfache Aufzeichnungsfeldüberschreitungen zu erfassen sind, um die Kurvenaufzeichnung im Ansprechen auf die Meßwerte $Y_M$ sicherzustellen. Es ist hierbei nur erforderlich, daß die Aufzeichnungsbreiten dann entsprechend mehrfach berücksichtigt werden, um dem Programmablaufplan gemäß Fig. 2 zu genügen.

Um die im Ansprechen auf die erfaßten Meßwerte $Y_M$ mittelbar aufgezeichneten Kurvenbereiche 4 im Aufzeichnungsfeld 1 kenntlich zu machen, sind hier nicht gezeigte Torschaltungen im Impulsfolgenbetrenzer 23 vorgesehen, an deren einem Eingang jeweils ein durch die Extremwerte $Y_{MIN}$ und $Y_{MAX}$ festgelegtes Potential anliegt, um die Torschaltung vorzubereiten, und an deren jeweiligem anderen Eingang ein Potential nur dann angelegt wird, wenn der jeweils zugeführte Meßwert $Y_M$ den betreffenden Extremwert $Y_{MIN}$ oder $Y_{MAX}$ unter- bzw. überschreitet. Im Ansprechen hierauf wird dann die betreffende Torschaltung freigegeben, deren Ausgang über eine Steuerleitung 27 (Fig. 3A) mit der Steuereinrichtung 25 der Aufzeichnungseinheit 26 in Verbindung steht.

Enthält die Aufzeichnungseinheit 26 zu digitaler Aufzeichnung mehrere Aufzeichnungsköpfe, dann lassen sich in einfacher Weise die den Extremwerten $Y_{MAX}$ und $Y_{MIN}$ entsprechenden Aufzeichnungsköpfe zu einer für die Dauer der Aufzeichnungsfeldüberschreitung wirkende Strichmarkierung im Ansprechen auf Signale über Steuerleitung 27 erregen, oder aber es können bei einer anderen Lösung über eine Torschaltungssteuerung besondere Aufzeichnungsköpfe für Farbkurvenaufzeichnung angesteuert werden. Andererseits könnten auch Signale über Steuerleitung 27 den Betrieb eines frei schwingenden Multivibrators auslösen, dessen Ausgangssignale dann eine intermittierende Betätigung des Aufzeichnungsorgans bzw. der Aufzeichnungsorgane steuert.

Während bei der oben beschriebenen Anordnung zur Durchführung des erfindungsgemäßen Verfahrens in einfachster Weise
von digital erfaßten Meßwerten ausgegangen ist, ist in der
Praxis in vielen Fällen doch davon auszugehen, daß der Meßwertaufnehmer für analoge Betriebsweise eingerichtet ist. In
diesem Falle gilt dann das in Fig. 3A gezeigte Blockschaltbild. Dem Meßwertaufnehmer 21 ist ein Analog-Digital-Umsetzer 22 nachgeschaltet, dessen Ausgang den Impulsfolgenbegrenzer 21 steuert. Für den Impulsfolgenbegrenzer 23 gilt
dabei das obengesagte, wobei allerdings für Analogaufzeichnung zwischen Steuereinrichtung 25 der Anzeigeeinheit 26
noch ein Digital-Analog-Umsetzer 24 einzuschalten ist. Die
Steuerleitung 27 liegt dabei direkt zwischen Impulsfolgenbegrenzer 23 und Anzeige-Steuereinrichtung 25.

Aber auch bei Verwendung eines Analog-Meßwertaufnehmers 21
und einer Analog-Aufzeichnungseinheit 26 sind noch weitere
Vereinfachungen möglich. So kann z. B. durch geeignete Auslegung eines Analog-Digital-Umsetzers die für die Durchführung des erfindungsgemäßen Verfahrens erforderliche Impulsfolgenbegrenzung gleichzeitig hiermit erfolgen. Geeignete
Schaltungen hierzu finden sich in dem bereits genannten Buch
"Taschenbuch der Nachrichtenverarbeitung", zweite Auflage,
von K. Steinbuch, auf den Seiten 727 ff. Unter entsprechender Abwandlung lassen sich die dort beschriebenen Schaltungen für die Zwecke der Erfindung heranziehen.

Gemäß oben aufgeführter Fig. 3B ist also dem Meßwertaufnehmer 21 ein Analog-Digital-Umsetzer mit Impulsfolgenbegrenzung 28 nachgeschaltet. Wie bereits erwähnt, kann aber auch
die Aufzeichnung im Aufzeichnungsfeld 1 digital erfolgen, so

GE 979 002E

daß dann dem Impulsfolgenbegrenzer 23 oder dem Analog-Digital-Umsetzer mit Impulsfolgenbegrenzung 28 eine Steuereinrichtung mit Decodiermatrix 29 nachgeschaltet werden muß, um entsprechend die Aufzeichnungsorgane zu steuern. Eine hierzu geeignete Decodiermatrix läßt sich der bereits genannten deutschen Patentschrift 1 798 042 entnehmen. Werden die letzten Schaltungsmöglichkeiten miteinander kombiniert, so ergibt sich das in Fig. 3B gezeigte Blockschaltbild, in welchem ein Meßwertaufnehmer 21 mit einem Analog-Digital-Umsetzer mit Impulsfolgenbegrenzung 28 verbunden ist, dessen Ausgang am Eingang einer Steuereinrichtung mit Decodiermatrix 29 liegt, um die digital arbeitende Aufzeichnungseinheit 26 anzusteuern.

Neben den oben beschriebenen digitalen und hybriden Kurvenaufzeichnungsverfahren läßt sich das erfindungsgemäße Verfahren auch durch ein reines Analogverfahren implementieren. Auch hier wiederum kann eine Kurvenaufzeichnung gemäß Fig. 1A oder Fig. 1B durchgeführt werden. Zur Durchführung des der Darstellung nach Fig. 1A zugrundeliegenden Aufzeichnungsverfahrens ist der Meßwertaufnehmer 21 einmal an den Eingang eines zweiseitigen Begrenzers 31 angeschlossen und zum anderen an eine Umkehrstufe 32 (Inverter) wobei die Ausgänge beider Einheiten 31, 32 an entsprechenden Eingängen eines ersten Analogaddierers 33 liegen, dessen Ausgang einem ersten Eingang eines zweiten Analogaddierers 34 zugeführt ist. Der zweite Eingang des zweiten Analogaddierers 34 ist ebenfalls mit dem Ausgang des zweiseitigen Begrenzers 31 verbunden. Der Ausgang des zweiten Analogaddierers 34 liegt am Eingang der Steuereinrichtung 35, deren Ausgang mit der Aufzeichnungseinheit 26 verbunden ist.

Der zweiseitige Begrenzer 31 kann eine Diodenbrückenschaltung nach Art einer Grätzschaltung sein, deren eine Brückendiagonale, die mit gleichartigen Diodenelektroden in Verbindung steht, über regelbare Widerstände an einer Spannungsquelle liegt und deren andere mit ungleichartigen Diodenelektroden in Verbindung stehende Diagonale den Eingang und den Ausgang dieses Begrenzers bilden. Schaltungen dieser Art sind an sich ebenfalls bekannt, wie es z. B. der Seite 1150 des zuletzt genannten Buches zu entnehmen ist.

Bei Verwendung eines derartigen passiven Begrenzers kann aber unter Umständen die Verwendung eines Verstärkers erforderlich sein. In diesem Falle läßt sich dann gegebenenfalls auch ein zweiseitiger Begrenzungsverstärker anwenden, falls dies dem jeweiligen Verwendungszweck dienlich ist. Zur Steuerung durch die Extremwerte $Y_{MAX}$ und $Y_{MIN}$ kann das Signal zwischen Eingang und Ausgang des zweiseitigen Begrenzers 31 herangezogen werden, das dann bei Aufzeichnungsbreitenüberschreitung entweder eine Anzeigelampe zum Aufleuchten bringen kann oder aber über eine hier nicht gezeigte Verbindung mit der Steuereinrichtung 35 die Kenntlichmachung der Aufzeichnungsfeldüberschreitung, also die mittelbare Meßwert-Aufzeichnung, durch die Aufzeichnungseinheit 26 steuert.

Auch hier wiederum lassen sich spezielle Aufzeichnungsorgane oder, bei Verwendung nur eines Aufzeichnungsorgans, die jeweilige Betriebsweise zur Aufzeichnung in an sich bekannter Weise einstellen.

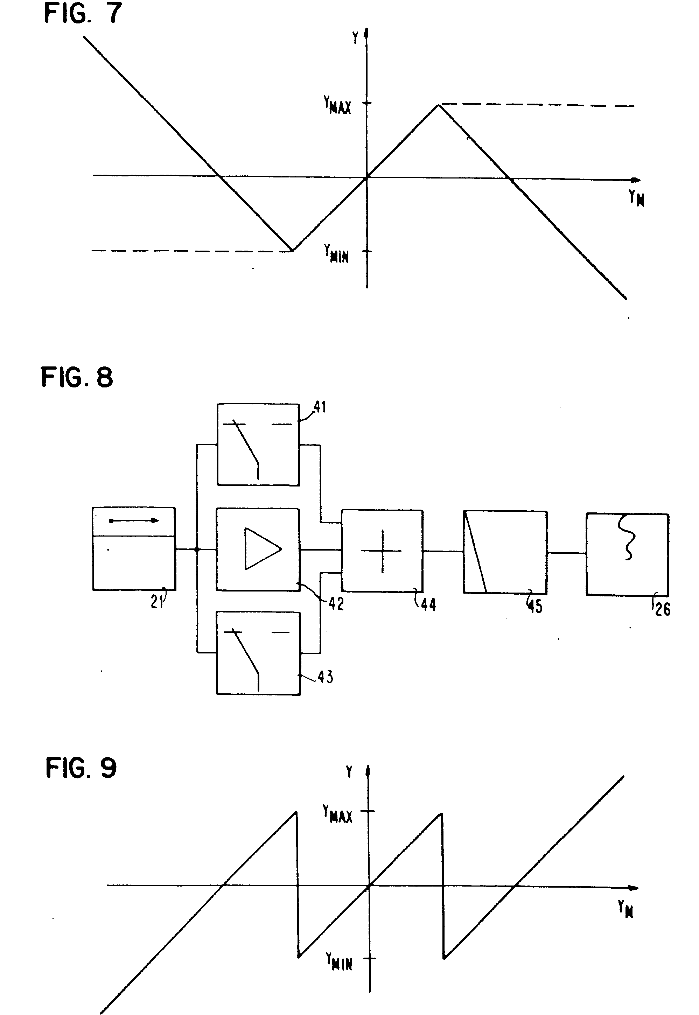

Die Funktion der aufgezeichneten Messwerte Y in Abhängigkeit von den zugeführten Meßwerten $Y_M$ für die Anordnung nach Fig. 6 läßt sich der graphischen Darstellung nach Fig. 7 entnehmen. Hierbei ist das Aufzeichnungsfeld durch die Extremwerte $Y_{MAX}$ und $Y_{MIN}$ definiert. Es zeigt sich, daß mit Hilfe der Anordnung gemäß Fig. 6 zur Durchführung des erfindungsgemäßen Verfahrens neben unmittelbarer Meßwertaufzeichnung auch noch Meßwerte aufgezeichnet werden können, die das Aufzeichnungsfeld um eine Aufzeichnungsbreite überschreiten und um eine Aufzeichnungsbreite unterschreiten.

GE 979 002E

Sind darüberhinaus Mehrfach-Aufzeichnungsbreitenüberschreitungen zu berücksichtigen, dann muß eine entsprechende Anzahl von in Fig. 6 gezeigten Stufen hintereinander geschaltet werden, so daß sich eine graphische Darstellung nach Fig. 4 ergibt. Hierin ist ebenfalls der Aufzeichnungswert Y in Abhängigkeit von den Meßwerten $Y_M$ aufgetragen. Bei einer entsprechenden Anzahl von Stufen gemäß Fig. 6 ergibt sich also eine symmetrische Sägezahnschwingung mit fallenden Periodenteilabschnitten 17, 19 und steigenden Periodenabschnitten, wie z. B. 18. Die graphische Darstellung nach Fig. 4 läßt sich sinngemäß auch für die im Zusammenhang mit Fig. 3A und 3B gezeigten Digitalverfahren anwenden. Beiden graphischen Darstellungen nach Fig. 7 und Fig. 4 ist deutlich zu entnehmen, daß bei Aufzeichnungsfeldüberschreitung ab der jeweiligen Randbegrenzung die Meßwertzählung in umgekehrter Ordinatenrichtung zu erfolgen hat, da die Aufzeichnung von der erreichten Randbegrenzung ab bei Aufzeichnungsfeldüberschreitung nunmehr in umgekehrter Richtung erfolgt.

Zur Durchführung des der Fig. 1B zugrundeliegenden Verfahrens in Analogtechnik dient eine Anordnung, wie sie durch das Blockschaltbild nach Fig. 8 angedeutet ist. Der Meßwertaufnehmer 21 ist mit seinem Ausgang sowohl an einem Eingang eines Verstärkers 42 als auch an die Eingänge je einer elektronischen Schwellenwertumschalteinrichtung 41 und 43 angeschlossen, die bei Überschreiten von Schwellenwerten durch die Meßwerte $Y_M$ das Ausgangspotential sprunghaft um einen der Aufzeichnungsbreite des Aufzeichnungsfeldes 1 entsprechenden Betrag herabsetzen. Schwellenwertumschalteinrichtungen dieser Art können Differentialverstärker, Stromübernahmeschalter und dergleichen sein, wobei der jeweilige Bezugswert durch den betreffenden Extremwert $Y_{MAX}$ und $Y_{MIN}$ dargestellt wird. Die Schwellenwerte der elektronischen Schwellenwertumschalteinrichtungen 41 und 43 liegen an den Eingängen eines Analogaddierers 44, dessen Ausgang wiederum mit dem Eingang einer Steuereinrichtung 45 zur Steuerung der An-

GE 979 002E

zeigeeinheit 26 verbunden ist. Die Steuereinrichtung 45 leitet aus den Ausgangssignalen des Analogaddierers 44 auch entsprechende Steuersignale zur Kenntlichmachung von Kurvenabschnitten bei Aufzeichnungsfeldüberschreitungen, also mittelbarer Meßwert-Aufzeichnung, ab.

Der Verstärker 44 ebenso wie der im Zusammenhang mit der zweiseitigen Begrenzung gemäß der Anordnung nach Fig. 6 verwendete Verstärker arbeiten in vorteilhafter Weise zumindest im durch das Aufzeichnungsfeld vorgegebenen Bereich linear, um eine lineare Abhängigkeit der aufgezeichneten Meßwerte von den eintreffenden Meßwerten $Y_M$ sicherzustellen. Für bestimmte Zwecke jedoch können auch nicht-lineare Abhängigkeiten bzw. Betriebsweisen, wie z. B. logarithmische, bei der Amplitudenbegrenzung bzw. Impulsfolgenbegrenzung vorgegeben sein, um bestimmte Aufgaben, insbesondere beim Einsatz des erfindungsgemäßen Verfahrens in Analogrechnern, in einfacher Weise durchführen zu können. Damit ergeben sich durch das erfindungsgemäße Verfahren also nicht nur Vorteile bei Kurvenaufzeichnung von Meßwerten, sondern auch bei Ausgabeeinheiten von Analogrechnern.

Zurückkommend auf die Schaltungsanordnung nach Fig. 8 ist darauf hinzuweisen, daß unter Verwendung nur einer Stufe sich die Meßwertaufzeichnung nach der graphischen Darstellung nach Fig. 9 einstellt, wo ebenfalls wieder die aufgezeichneten Meßwerte Y in Abhängigkeit von den eintreffenden Meßwerten $Y_M$ aufgetragen sind. Auch hier wieder ist die Aufzeichnungsbreite durch die Extremwerte $Y_{MAX}$ und $Y_{MIN}$ vorgegeben. Die Verwendung einer derartigen Stufe führt also ebenfalls zu einer Verdreifachung des Aufzeichnungsfeldes bei genauer Kurvenaufzeichnung, ohne daß die Aufzeichnungsfeldüberschreitung nachteilig wirkt. Allerdings darüber hinaus lassen sich Meßwerte nicht mehr erfassen.

Sollen Aufzeichnungsfeldüberschreitungen in mehrfacher Anzahl berücksichtigt werden, dann müssen entsprechend mehrere Stufen der Schaltungsanordnung nach Fig. 8 Anwendung finden, so daß sich dann für die Meßwertaufzeichnung ein asymmetrischer Sägezahnverlauf, wie in der graphischen Darstellung nach Fig. 5 gezeigt, ergibt. Die Sägezahnperiode entspricht hierbei im wesentlichen der Aufzeichnungsbreite zwischen den Extremwerten $Y_{MAX}$ und $Y_{MIN}$, wenn auch hier wieder die aufgezeichneten Meßwerte Y in Abhängigkeit von den eintreffenden Meßwerten $Y_M$ aufgetragen sind. Die jeweilige Unstetigkeitsstelle im Sägezahnverlauf wird durch die Schaltgeschwindigkeit der Schwellenwertumschalteinrichtungen 41 und 43 bestimmt, welche bei den heute zur Verfügung stehenden Mitteln, wie Stromübernahmeschalter, praktisch zu vernachlässigen ist. Die asymmetrisch verlaufende Sägezahnkurve gemäß Fig. 5 läßt sich theoretisch unbegrenzt anwenden, wenn Digitalverfahren mit Hilfe von Anordnungen nach Fig. 3A und 3B benutzt werden; bei Analogverfahren allerdings müssen Stufen in entsprechender Anzahl, wie oben ausgeführt, bereitgestellt werden.

Zur Kenntlichmachung von Schreibspuren in bestimmten Kurvenbereichen des Aufzeichnungsfeldes 1 lassen sich Verfahren und Maßnahmen anwenden, wie sie z. B. der US-PS 3 042 922 zu entnehmen sind. Hierbei dient die jeweilige Länge der entstehenden Striche zur Kennzeichnung. In Abweichung hiervon erfolgt allerdings die Steuerung der Unterbrechungen bei gleichzeitiger Aufzeichnung der Extremwerte $Y_{MIN}$ und $Y_{MAX}$ im Bereich der Randbegrenzungen des Aufzeichnungsfeldes 1.

PATENTANSPRÜCHE

1. Verfahren und Anordnung zur Steuerung einer Aufzeichnungseinheit (26) mittels einer Aufzeichnungssteuereinheit (z. B. 23) im Ansprechen auf in Kurvenform (2) in ein Aufzeichnungsfeld (1) eines Aufzeichnungsmediums (10) aufzuzeichnende Meßwerte ($Y_M$), wobei die durch Meßwerte ($Y_M$) bedingten Aufzeichnungsbreiten-Überschreitungen aufgrund sich ergebender Vergleichsresultate ($Y_{MIN} > Y_M > Y_{MAX}$) der betreffenden Meßwerte ($Y_M$) mit durch die Randbegrenzungen (3,5) des Aufzeichnungsfeldes (1) vorgegebenen Bezugswerten ($Y_{MIN}$, $Y_{MAX}$) Aufzeichnungsorgane zu entsprechender Kenntlichmachung erregen, dadurch gekennzeichnet, daß neben an sich bekannter, unmittelbarer Meßwert-Aufzeichnung zur Erfassung von innerhalb des Aufzeichnungsfeldes (1) liegenden Meßwerten ($Y_{MIN} < Y_M < Y_{MAX}$) die Aufzeichnungssteuereinheit (23) bei mittelbarer Aufzeichnung zum Erfassen von an sich außerhalb des Aufzeichnungsfeldes (1) liegenden Meßwerten ($Y_{MIN} > Y_M > Y_{MAX}$) innerhalb des Aufzeichnungsfeldes (1) wirksame Aufzeichnungsorgane zur Fortsetzung der Kurvenaufzeichnung bei gleichzeitiger Kennzeichnung mittels besonderer Aufzeichnungsorgansteuerung des betreffenden, sich an sich außerhalb des Aufzeichnungsfeldes (1) erstreckenden Kurvenabschnitts (2') erregt.

2. Verfahren nach Anspruch 1, dadurch gekennzeichnet, daß die Aufzeichnungssteuereinheit (23) eine Sägezahnabhängigkeit der in Kurvenform (2) aufzuzeichnenden Meßwerte von den erfaßten Meßwerten ($Y_M$) herbeiführt, in dem die Sägezahnamplitude die durch die Bezugswerte ($Y_{MIN}$, $Y_{MAX}$) definierten Randbedingungen festlegt, so daß einem Sägezahndauer-Abschnitt (z. B. 18) mit unmittelbarer Meßwert-Aufzeichnung mindestens je ein Sägezahndauer-Abschnitt (17, 19) zur mittelbaren Meßwert-Aufzeichnung zugeordnet wird.

3. Verfahren nach Anspruch 2,
dadurch gekennzeichnet,
daß bei Anwenden eines bezüglich Anstieg und Abfall symmetrischen Sägezahnverlaufs (z. B. Fig. 4) die Sägezahndauer-Abschnitte (17, 18, 19) untereinander gleich sind sowie jeweils einer Halbperiode entsprechen und daß beim Ausnutzen eines asymmetrischen Sägezahnverlaufs (z. B. Fig. 5) die Sägezahndauer-Abschnitte im wesentlichen jeweils etwa einer Periode entsprechen.

4. Anordnung zur Durchführung des Verfahrens nach den Ansprüchen 1 bis 3,
dadurch gekennzeichnet,
daß einem Meßwertaufnehmer (21) ein Analog-Digital-Umsetzer (22) zugeordnet ist, der an einen als Aufzeichnungs-Steuereinheit dienenden, auf die Randbedin-gungen zwecks Übergang von unmittelbarer auf mittelbare Meßwert-Aufzeichnung bzw. umgekehrt ansprechenden Impulsfolgenbegrenzer (23) zur Begrenzung der abgebbaren Impulsanzahl auf einen Wert entsprechend der Aufzeichnungsbreite des Aufzeichnungsfeldes (1) angeschlossen ist, und daß der Ausgang des Impulsfolgenbegrenzers (23) mit einer Steuereinrichtung (z. B. 25) der Aufzeichnungseinheit (26) gekoppelt ist.

5. Anordnung nach Anspruch 4,
dadurch gekennzeichnet,
daß zur Verarbeitung digitaler Meßwerte der Meßwertaufnehmer (21) direkt mit dem Impulsfolgenbegrenzer (23) verbunden ist.

GE 979 002E

6.  Anordnung nach Anspruch 4 und 5,

    dadurch gekennzeichnet,

    daß der Impulsfolgenbegrenzer (23) zur Anwendung eines symmetrischen Sägezahnverlaufs (Fig. 4) mit einer Einrichtung für jeweils bei Wirksamwerden der Randbedingungen auszulösende Impulsumsetzungs-Umkehr ausgestattet ist.

7.  Anordnung nach Anspruch 4 und 5,

    dadurch gekennzeichnet,

    daß der Impulsfolgenbegrenzer (23) zum Ausnutzen des asymmetrischen Sägezahnverlaufs (Fig. 5) mit einer Einrichtung zum Rücksetzen des Impulsumsetzungsvorgangs bei Wirksamwerden der Randbedingungen ausgestattet ist.

8.  Anordnung nach den Ansprüchen 4 bis 7,

    dadurch gekennzeichnet,

    daß zwischen Impulsfolgenbegrenzer (23) und Steuereinrichtung (25) der Aufzeichnungseinheit (26) ein Digital-Analog-Umsetzer (24) liegt.

9.  Anordnung nach den Ansprüchen 4 bis 7,

    dadurch gekennzeichnet,

    daß die Aufzeichnungseinheit (26) an eine in der Steuereinrichtung (29) enthaltene Decodiermatrix angeschlossen ist, deren Eingang mit dem Ausgang des Impulsfolgenbegrenzers (23) verbunden ist.

10. Anordnung nach den Ansprüchen 8 oder 9,

    dadurch gekennzeichnet,

    daß eine Steuerleitung (27) zwischen Impulsfolgenbegrenzer (23) und Steuereinrichtung (25) der Aufzeichnungseinheit (26) für die Übertragung von Signalen zur Kennzeichnung mittelbarer Meßwert-Aufzeichnung liegt.

GE 979 002E

11. Anordnung nach den Ansprüchen 4, 7 bis 10,
dadurch gekennzeichnet,
daß ein Analog-Digital-Umsetzer gleichzeitig zur Impulsfolgenbegrenzung (Fig. 3B) ausgelegt ist.

12. Anordnung zur Durchführung des Verfahrens nach den Ansprüchen 1 bis 3,
dadurch gekennzeichnet,
daß zum Anwenden des symmetrischen Sägezahnverlaufs (Fig. 7) zwecks Auslösen des Übergangs von unmittelbarer Meßwert-Aufzeichnung zu mittelbarer Meßwert-Aufzeichnung bzw. umgekehrt der Ausgang des Meßwertaufnehmers (21) an den Eingängen sowohl eines zweiseitigen, die Aufzeichnungsbreite des Aufzeichnungsfeldes (1) definierenden Amplitudenbegrenzers (31) als auch einer Umkehrstufe (32) liegt, indem die Ausgänge des Amplitudenbegrenzers (31) und der Umkehrstufe (32) mit den Eingängen eines ersten Analogaddierers (33) verbunden sind, und daß die Ausgänge des zweiseitigen Amplitudenbegrenzers (31) und des ersten Analogaddierers (33) mit den Eingängen eines zweiten Analogaddierers (34) verbunden sind, dessen Ausgang an der Steuereinrichtung (35) der Aufzeichnungseinheit (26) liegt.

13. Anordnung zur Durchführung des Verfahrens nach den Ansprüchen 1 bis 3,
dadurch gekennzeichnet,
daß zum Ausnutzen des asymmetrischen Sägezahnverlaufs (Fig. 9) zwecks Auslösen des Übergangs von unmittelbarer Meßwert-Aufzeichnung zu mittelbarer Meßwert-Aufzeichnung bzw. umgekehrt der Ausgang des Meßwertaufnehmers (21) sowohl mit dem Eingang eines Verstärkers (42) als auch mit den Eingängen je einer Umschalteinrichtung (41, 43) zum Ansprechen auf einen durch den betreffenden Meßwert ($Y_M$) erreichten, jeweils einer Randbegrenzung (3 oder 5) des Aufzeichnungsfeldes (1) entsprechenden Schwellenwert ($Y_{MIN}$ oder $Y_{MAX}$) verbunden ist und daß die Ausgänge des Verstärkers (42) und der Umschalteinrichtungen (41, 43) an den Eingängen eines Analogaddierers (44) liegen, dessen Ausgang an die mit der Aufzeichnungseinheit (26) verbundene Steuereinrichtung (25) angeschlossen ist.

14. Anordnung nach Anspruch 12,
    dadurch gekennzeichnet,
    daß als Quelle für das Steuersignal zur Kennzeichnung mittelbarer Meßwert-Aufzeichnung der Eingang zusammen mit dem Ausgang des zweiseitigen Amplitudenbegrenzers (31) dient.

15. Anordnung nach Anspruch 13,
    dadurch gekennzeichnet,
    daß als Quelle für das Steuersignal zur Kennzeichnung mittelbarer Meßwert-Aufzeichnung der jeweilige Ausgang der Umschalteinrichtungen (41, 43) zusammen mit dem Eingang des Verstärkers (42) dient.

**FIG.1A**

**FIG.1B**

**FIG. 2**

## FIG. 3A

MESSWERT-AUF-NEHMER `21` — ANALOG-DIGITAL-UMSETZER `22` — IMPULS-FOLGEN-BEGRENZER `23` — DIGITAL-ANALOG-UMSETZER `24` — STEUER-EINRICHTG. `25` — KURVEN-SCHREIBER `26`

27

## FIG. 3B

MESSWERT-AUFNEHMER `21` — A/D-UMSETZER MIT IMP-FOLG. BEGRENZER `28` — STEUEREIN-RICHTG. MIT DEC.-MATRIX `29` — KURVEN-SCHREIBER `26`

## FIG. 4

## FIG. 5

## FIG. 6

MESSWERT-AUFNEHMER `21` — VERSTARKER M. ZWEISEITG. BEGRENZUNG `31` — UMKEHR-STUFE `32` — 1.ANALOG-ADDIERER `33` — 2 ANALOG-ADDIERER `34` — STEUER-EINRICHTG. `35` — KURVEN-SCHREIBER `26`

0024626

**FIG. 7**

**FIG. 8**

**FIG. 9**